# EUROPEAN PATENT APPLICATION

(11) **EP 4 478 381 A1**
(43) Date of publication of application: **18.12.2024**
(21) Application number: 23752711.4
(22) Date of filing: 27.01.2023
(51) Int. Cl.: H01B 7/00, H01B 7/02, H01F 5/00, H01F 5/06, H02K 3/30, H02K 3/32

(54) **INSULATED WIRE, COIL, ROTATING ELECTRIC MACHINE, AND ELECTRIC/ELECTRONIC DEVICE**

(30) Priority: 08.02.2022 JP 2022018228
(71) Applicant: Essex Furukawa Magnet Wire Japan Co., Ltd., Tokyo 101-0047 (JP); DENSO CORPORATION, Kariya-shi, Aichi 448-8661 (JP)
(72) Inventor: OSADA, Katsumi, Tokyo 101-0047 (JP); YAMAHATA, Michiaki, Tokyo 101-0047 (JP); FUKUDA, Hideo, Tokyo 101-0047 (JP); KAJI, Takefumi, Kariya-shi, Aichi 448-8661 (JP); TAKAHASHI, Yuki, Kariya-shi, Aichi 448-8661 (JP); KIBA, Eiji, Kariya-shi, Aichi 448-8661 (JP)
(74) Representative: Forstmeyer, Dietmar
(86) International application number: PCT/JP2023/002732
(87) International publication number: WO 2023/153246

(57) **Abstract**

An insulated wire includes an assembled conductor obtained by assembling or twisting a plurality of strands; an insulating layer coating an outer periphery of the assembled conductor; and a filler region that fills a space between the strands and a space between the strands and the insulating layer and includes a thermoplastic resin.

## Description

### FIELD OF THE INVENTION

The present invention relates to an insulated wire, a coil, rotating electrical machine, and an electrical or electronic equipment.

### BACKGROUND OF THE INVENTION

In coils for an electrical or electronic equipment such as high-speed switching elements, inverter motors, and transformers, an insulated wire including a resin insulating film on an outer peripheral surface of a linear metal conductor is used as a magnet wire. The insulating film of the insulated wire is formed by applying and baking a thermosetting resin, extruding and coating a thermoplastic resin, or combining these.

As the insulated wire, for example, an insulated wire using a stranded wire (assembled conductor) obtained by twisting a plurality of strands (split conductors) as a conductor is known. It is known that by forming an assembled conductor with a plurality of thin strands and using an insulated wire including the assembled conductor as a winding wire of a coil or the like, an increase in resistance due to a skin effect when used at high frequencies can be suppressed. For example, Patent Literature 1 describes a conductive wire including a stranded wire formed by twisting a plurality of strands each having an insulating layer on a surface thereof and an insulating layer coating a surface of the stranded wire, in which the insulating layer coating the surface of the conductive wire (stranded wire) is thicker than the insulating layer on the surface of the strand.

### CITATION LIST

### PATENT LITERATURE

Patent Literature 1: JP-A-2009-199749 ("JP-A" means unexamined published Japanese patent application)

### SUMMARY OF THE INVENTION

### TECHNICAL PROBLEM

In an insulated wire in which a plurality of strands are assembled or twisted to form an assembled conductor and an insulating layer is provided on an outer periphery of the conductor, even when the stranded wire is compression-molded using, for example, a metal mold, a slight void (gap) is generated between the strands. Gas occupying a void portion expands by heat at the time of forming the insulating layer on the outer periphery of the conductor to push up the insulating layer, which causes an appearance defect such as a protrusion in the insulating layer. In addition, such a protrusion or the like may cause deterioration in dimensional accuracy of the insulated wire or deterioration in electrical characteristics.

In order to solve the above problem, for example, it is conceivable to slow a formation speed of the insulating layer. However, this method reduces production efficiency and increases production cost.

The present invention provides an insulated wire including a plurality of strands as an assembled conductor, in which an appearance defect such as a protrusion in an insulating layer is suppressed, and a dielectric breakdown voltage can be increased. Another object of the present invention is to provide a coil, a rotating electrical machine, and an electrical or electronic equipment using the insulated wire.

### SOLUTION TO PROBLEM

As a result of studies to solve the above problem, the present inventors have found that by applying a filler containing a thermoplastic resin to a strand in advance, forming an assembled conductor formed of the strand to which the filler has been applied, and then subjecting the assembled conductor to heating treatment, the filler applied to the strand flows to eliminate or reduce voids between the strands due to a capillary phenomenon, and as a result, an insulated wire obtained by providing an insulating layer (insulating film) on an outer periphery of the assembled conductor is less likely to cause the appearance defect and has excellent dimensional accuracy, and shows a high dielectric breakdown voltage. The present invention has been further studied and completed based on these findings.

That is, the above problem of the present invention has been solved by the following means.
[1] An insulated wire, including:
   an assembled conductor obtained by assembling or twisting a plurality of strands;
   an insulating layer coating an outer periphery of the assembled conductor; and
   a filler region that fills a space between the strands and a space between the strands and the insulating layer and includes a thermoplastic resin.
[2] The insulated wire described in [1], wherein a ratio of voids occupying a cross-sectional area of the assembled conductor is 0.55% or less.
[3] The insulated wire described in [1] or [2], wherein the filler region includes at least one kind of polyetherimide and polyphenylsulfone.
[4] The insulated wire described in any one of [1] to [3], wherein the insulating layer includes at least one kind of polyetheretherketone, polyphenylene sulfide, polyethylene terephthalate, 66 nylon, polyamideimide, and polyimide.
[5] The insulated wire described in any one of [1] to [4], wherein the assembled conductor has a center strand, and an average thickness of a filler region on an outer periphery of the center strand is thicker than an average thickness of a filler region other than the filler region on the outer periphery of the center strand.
[6] The insulated wire described in any one of [1] to [5],
   wherein when a cross-sectional shape of the assembled conductor is rectangular, a width of the rectangle is 1.0 to 5.0 mm and a thickness of the rectangle is 0.4 to 3.0 mm, and when the cross-sectional shape of the assembled conductor is circular, an outer diameter of the circle is 0.25 to 2.0 mm, and
   wherein a thickness of the insulating layer coating the outer periphery of the assembled conductor is 20 to 250 µm.
[7] The insulated wire described in any one of [1] to [6], wherein the strand has an insulating layer including a thermosetting resin on an outer periphery of a conductive wire, a film thickness of the insulating layer is 0.5 to 30 µm, and the thermosetting resin includes at least one kind of polyamideimide, polyimide, polyester, and polyurethane.
[8] The insulated wire described in any one of [1] to [7], wherein the filler region is formed by a filler layer coated on the outer periphery of the strand flowing by heating, and a thickness of the filler layer is 3.0 to 15 µm.
[9] The insulated wire described in any one of [1] to [8], wherein the assembled conductor is formed by twisting 7 to 37 strands.
[10] A coil, using the insulated wire described in any one of [1] to [9].
[11] A rotating electrical machine and an electrical or electronic equipment, including the coil described in [10].

A numerical value range indicated by using the term "to" in the present specification means a range including the numerical values described before and after the term "to" as the lower limit value and the upper limit value, respectively.

In the present invention or the specification, a cross section (cross-sectional shape) orthogonal to a longitudinal direction of the insulated wire is simply referred to as a cross section (cross-sectional shape). The cross-sectional shape in the present invention does not mean that only a cut surface has a specific shape, but the cross-sectional shape is continuously connected in a longitudinal direction of an entire insulated wire, and the cross-sectional shape orthogonal to this direction is substantially the same for any portion in the longitudinal direction of the insulated wire unless otherwise specified. In the case of the stranded wire, when the cross-sectional shape is rectangular or the like, the cross-sectional shape periodically changes and differs in the longitudinal direction, but the cross-sectional shape at any portion in the longitudinal direction is substantially the same.

### ADVANTAGEOUS EFFECTS OF INVENTION

According to the present invention, it is possible to provide an insulated wire having a plurality of strands as an assembled conductor, excellent in appearance, and having a high dielectric breakdown voltage, and a coil, a rotating electrical machine, and an electrical or electronic equipment using the insulated wire.

### BRIEF DESCRIPTION OF DRAWINGS

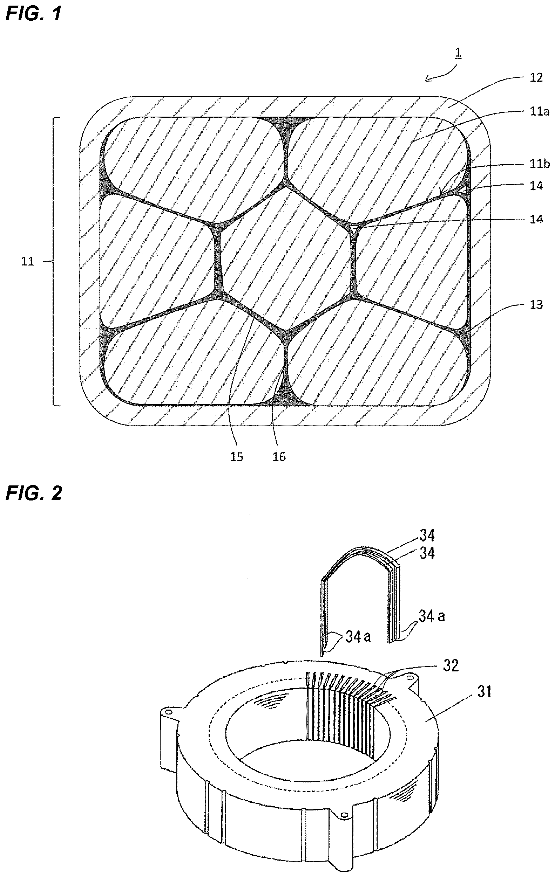

{Fig. 1}
   FIG. 1 is a schematic end view showing a preferred example of an insulated wire of the present invention.
{Fig. 2}
   FIG. 2 is a schematic exploded perspective view showing a preferred aspect of a stator used in an electrical or electronic equipment of the present invention.
{Fig. 3}
   FIG. 3 is a schematic perspective view showing the preferred aspect of the stator used in the electrical or electronic equipment of the present invention.

### DESCRIPTION OF EMBODIMENTS

### [Insulated Wire]

An insulated wire of the present invention has: an assembled conductor formed by assembling a plurality of strands or an assembled conductor formed by twisting a plurality of strands (referred to as an "assembled conductor formed by assembling or twisting a plurality of strands"); an insulating layer (hereinafter, also referred to as "outer sheath insulating layer") coating an outer periphery of the assembled conductor; and a filler region including a thermoplastic resin, the filler region filling a space between the strands and a space between the strands and the outer sheath insulating layer. Each strand constituting the assembled conductor preferably has an insulating layer (hereinafter, also referred to as an "strand insulating layer") on an outer periphery of a conductive wire (typically a metal wire) constituting each strand. In the insulated wire of the present invention, voids generated by using the assembled conductor are filled with a thermoplastic molten resin (thermoplastic resin). With such a configuration of the insulated wire, the voids in the insulated wire can be reduced, and the gas occupying the void portion can be fixed by the thermoplastic resin. As a result, it is possible to suppress the appearance defect such as a protrusion caused by the intrinsic gas in the process of forming the outer sheath insulating layer, and it is also possible to increase the dielectric breakdown voltage. In addition, it is considered that the presence of the filler region also contributes to improvement of flexibility of the insulated wire.

A preferred embodiment of the insulated wire of the present invention will be described with reference to the drawings, but the present invention is not limited to an aspect described below except that the present invention is defined in the present invention.

The insulated wire 1 shown in the cross-sectional view of FIG. 1 has a stranded wire (assembled conductor) 11 in which a plurality of strands 11a each having a strand insulating layer 11b are twisted, an outer sheath insulating layer 12 which is an insulating film coating the stranded wire 11, and a filler region 13 filling the inside of the outer sheath insulating layer 12. Note that the insulated wire of the present invention is not limited to the cross-sectional shape of the insulated wire shown in the cross-sectional view of FIG. 1, and each component is appropriately set according to a purpose within a range defined in the present invention.

The cross-sectional shape of the insulated wire of the present invention can be, for example, circular, elliptical, or rectangular (rectangular shape).

In particular, when the cross-sectional shape is molded into a rectangular shape, the strands are crushed and deformed with each other, so that the cross-sectional shape of the strands forms a polygon. In a case of an assembled conductor having 7 strands and one center strand shown in FIG. 1, the center strand may form a hexagon, and the other strands may form a quadrangle or a pentagon. At this time, not only an angle ideally formed only by an intersection of straight lines but also an angle having a constant curvature is regarded as an angle.

### <Strand>

As the conductive wire constituting the strand (split conductor) used in the present invention, a metal wire conventionally used in the insulated wire can be widely used, and examples thereof include metal conductors such as a copper wire and an aluminum wire. In the present invention, a copper strand is preferable, and among them, copper to be used is preferably low oxygen copper having an oxygen content of 30 ppm or less, and more preferably low oxygen copper or oxygen-free copper having an oxygen content of 20 ppm or less. When the oxygen content is 30 ppm or less, in a case where the strand is melted by heat for welding, voids due to contained oxygen are not generated in the welded portion, and it is possible to prevent the electrical resistance of the welded portion from deteriorating and to maintain the strength of the welded portion.

When the conductive wire constituting the strand is copper or aluminum, various copper alloys or aluminum alloys can be used depending on the application in consideration of necessary mechanical strength. For the application such as a rotating electrical machine (motor), pure aluminum having a purity of 99.00% or more capable of obtaining a high current value is preferable.

The cross-sectional shape of the strand used in the present invention is not particularly limited. For example, a strand having a circular cross-sectional shape, an elliptical cross-sectional shape, a rectangular cross-sectional shape (rectangular shape), a hexagonal cross-sectional shape, or the like is exemplified. In the present invention, it is preferable to use a strand having a circular cross-sectional shape as a material from the viewpoint of assembling a plurality of strands. FIG. 1 shows a case where a stranded wire is formed using a strand having a circular cross-sectional shape as a material, and the stranded wire is compression molded.

### (Strand Insulating Layer)

The strand used in the present invention may have a strand insulating layer on the outer peripheral surface of the conductive wire (typically a metal wire). Examples of such a strand insulating layer include an insulating layer (thermosetting resin layer) having a thermosetting resin.

As the thermosetting resin, a resin that can be normally used for the insulated wire can be appropriately applied. Examples thereof include polyamideimide (PAI), polyimide (PI), polyesters such as thermosetting polyester (PEst) and H-type polyester (HPE), polyurethane (PU), polyesterimide (PEsI), polyimide hydantoin-modified polyester, polyhydantoin, polybenzimidazole, a melamine resin, or an epoxy resin, and these resins may be used alone or in combination. The thermosetting resin preferably includes at least one kind of polyamideimide, polyimide, polyester, and polyurethane.

The strand insulating layer can be formed by an ordinarily method. For example, the strand insulating layer is formed by an applying and baking step of applying and baking a thermosetting resin varnish, and normally, a method of forming a strand insulating layer having a target thickness by repeating the applying and baking can be exemplified. This varnish contains a resin component, a solvent, and, if necessary, a curing agent of the resin component or various additives. The solvent is preferably an organic solvent, and a solvent capable of dissolving or dispersing the resin component is appropriately selected. The number of repetitions of the applying and baking for forming the strand insulating layer is preferably one or more and ten or less, and more preferably one or more and five or less.

As a method of applying the varnish, an ordinarily method can be selected, and examples thereof include a method of using a varnish application die having an opening having a shape similar or substantially similar to the cross-sectional shape of the conductive wire. The varnish is normally baked in a baking furnace. The conditions at this time can be determined according to a type of the resin component or the solvent, and the like. For example, a passing time is 10 to 90 seconds at a furnace temperature of 400°C to 650°C.

When the thermosetting resin varnish contains various additives described above, the content of the additives is not particularly limited, but is preferably 5 parts by mass or less, and more preferably 3 parts by mass or less with respect to 100 parts by mass of the resin component.

As the thickness of the strand insulating layer, for example, a film thickness corresponding to 0 to 3 types of standards of JIS C 3215-0-1: 2014 (enameled copper wire) can be used, and a strand insulating layer thinner than this standard can also be used. For example, the thickness of the strand insulating layer is preferably 0.5 to 30 µm. As the strand used in the present invention, a strand having no strand insulating layer on the outer peripheral surface of the conductive wire may be used.

The strand used in the present invention may be a magnetic strand having a magnetic layer on the outer periphery of the conductive wire or a strand having an oxide film on the outer periphery of the conductive wire. As such a magnetic layer or oxide film, those used for a conductor of the insulated wire can be applied.

### <Assembled Conductor>

The assembled conductor used in the present invention is not particularly limited as long as it includes a plurality of strands. Examples of the assembly method include die assembling, rolling, and twisting.

The number of strands when the strands are assembled is also not particularly limited. For example, the number of strands may be two or more, and in consideration of the alignment property of the strands, the number of strands may be 7 or more in which 6 or more strands are disposed around one center strand. Considering the high alignment property, the number of strands may be 7 to 37.

In the present invention or the specification, among the plurality of strands, a strand that is not in contact with the outer sheath insulating layer coating the assembled conductor is referred to as a "center strand". For example, when the number of strands is 7 and the disposition shown in FIG. 1 is adopted, one strand at the center is a center strand.

### <Stranded Wire>

When twisting a plurality of strands as the assembly method, the disposition, twisting direction, twisting pitch, and the like of the strands can be appropriately set according to the application and the like. In order to suppress generation of voids (gaps) and to obtain a desired shape, it is preferable that the stranded wire used in the present invention is a rolled conductor which is twisted and then squeezed by a die or the like. As a method of forming the stranded wire, a method generally used in the insulated wire can be applied. The cross-sectional shape of the stranded wire may be circular, elliptical, or rectangular (rectangular shape), and can be appropriately determined according to the application of the insulated wire.

The dimensions of the assembled conductor can also be appropriately determined according to the application and the like. For example, when the assembled conductor is molded so as to have a rectangular cross-sectional shape, a width (long side) of the rectangle is preferably 1.0 to 5.0 mm, and a thickness (short side) is preferably 0.4 to 3.0 mm. The assembled conductor having a rectangular cross-sectional shape preferably has a shape in which chamfers (curvature radius r) are provided at four corners as shown in FIG. 1 in terms of suppressing partial discharge from corner portions (corner portions). When the assembled conductor is molded so as to have a rectangular cross-sectional shape, the dimensions of the assembled conductor are the width and thickness of a rectangle (virtual rectangle) circumscribing the outer peripheral surfaces of the plurality of strands disposed on the outer side in the cross section of the assembled conductor.

When the assembled conductor is molded so as to have a circular cross-sectional shape, the outer diameter (diameter: Φ) of the circle is preferably 0.25 to 2.0 mm. When the assembled conductor is molded so as to have a circular cross-sectional shape, the dimension of the assembled conductor is a diameter of a minimum circumscribed circle in the cross section of the assembled conductor.

### <Filler Region>

The filler region constituting the insulated wire of the present invention includes a thermoplastic resin. The filler region is disposed on the outer periphery of each strand.

Examples of the thermoplastic resin constituting the filler region include polyetherimide (PEI) and polyphenylsulfone (PPSU).

The thermoplastic resin applied to the filler region has a glass transition temperature of preferably 300°C or lower, more preferably 250°C or lower, and still more preferably 220°C or lower. By using the thermoplastic resin having a glass transition temperature equal to or lower than a certain temperature in this manner, as will be described later, the thermoplastic resin flows at the time of producing the insulated wire, enters the voids along the strands or the strand insulating layers by capillary phenomenon, and can fill the voids between the strands and between the strands and the insulating layer (remove the voids), and the gas can be fixed in the voids. That is, the filler region constituting the insulated wire of the present invention can be formed by increasing a fluidity of the thermoplastic resin by heat treatment at a specific temperature and moving the thermoplastic resin into the gap by the capillary phenomenon. In other words, the thermoplastic resin that has not undergone a flowing (molten) state associated with the heat treatment does not constitute the filler region in the present invention, and the thermoplastic resin constituting the filler region is a thermoplastic resin that has undergone the flowing (molten) state associated with the heat treatment. In this regard, in the present invention, a producing method (process) may be included as a specific matter in the invention of the insulated wire in order to clarify the invention by clearly indicating the difference from the object according to the prior art.

From the viewpoint of further enhancing the fluidity, the thermoplastic resin that forms the filler region preferably includes at least one kind of polyetherimide (glass transition temperature: 217°C) and polyphenylsulfone (glass transition temperature: 220°C). By using polyetherimide or polyphenylsulfone as the thermoplastic resin, adhesion to the outer sheath insulating layer can be further enhanced.

A ratio of the filler region occupying the inside of the outer sheath insulating layer can be appropriately set according to the number of strands, the method of assembling strands, the dimension of the assembled conductor, and the like.

From the viewpoint of further enhancing the removal efficiency of the voids at the time of producing the insulated wire, in the filler, an average thickness of a filler region 15 on the outer periphery of the strand (center strand) not in contact with or adjacent to the outer sheath insulating layer is preferably thicker than an average thickness of a filler region 16 between the strands in contact with the outer sheath insulating layer (other than the filler region on the outer periphery of the center strand). In the present invention, the "average thickness of the filler region on the outer periphery of the center strand" is an average value of the thicknesses of the filler regions existing between the outer peripheral surface (boundary surface) of the center strand and the outer peripheral surfaces of other strands. In addition, the "average thickness of the filler region other than the filler region on the outer periphery of the center strand" is an average value of the thicknesses of the filler regions between the strands in contact with or adjacent to the outer sheath insulating layer.

As described above, as a method of making the thickness of the filler region on the outer periphery of the center strand thicker than the average thickness of the filler region other than the filler region on the outer periphery of the center strand, for example, as described in a producing method described later, by making an application amount of the filler applied to the outer periphery of the strand used as the center strand larger than an application amount of the filler applied to the outer periphery of the strand other than the center strand, the average thickness of the filler region on the outer periphery of the center strand can be made thicker than the average thickness of the filler region other than the filler region on the outer periphery of the center strand.

### <Insulating Layer>

The insulated wire of the present invention has an outer sheath insulating layer on the outer periphery of the assembled conductor.

The outer sheath insulating layer may be an enamel baked layer of a thermosetting resin, or may be an extruded coating layer of a thermoplastic resin.

When the outer sheath insulating layer is the enamel baked layer of a thermosetting resin, examples of the thermosetting resin include the same as the thermosetting resin used for the strand insulating layer. Among them, the thermosetting resin used for the outer sheath insulating layer preferably includes at least one kind of polyamideimide and polyimide.

When the outer sheath insulating layer is the extruded coating layer of a thermoplastic resin, the thermoplastic resin is not particularly limited as long as it is a thermoplastic resin normally used in the insulated wire. For example, in addition to general-purpose engineering plastics such as polyamide (PA) (nylon), polyacetal (POM), polycarbonate (PC), polyphenylene ether (including modified polyphenylene ether), polybutylene terephthalate (PBT), polyethylene terephthalate (PET), polyethylene naphthalate (PEN), ultra-high molecular weight polyethylene, and the like; super engineering plastics such as polysulfone (PSF), polyethersulfone (PES), polyphenylene sulfide (PPS), polyarylate (U polymer), polyamideimide, polyetherketone (PEK), polyaryletherketone (PAEK), tetrafluoroethylene-ethylene copolymer (ETFE), polyetheretherketone (PEEK) (including modified polyetheretherketone (modified PEEK)), tetrafluoroethylene-perfluoroalkylvinylether copolymer (PFA), polytetrafluoroethylene (PTFE), thermoplastic polyimide resin (TPI), polyamideimide (PAI), liquid crystal polyester, and the like; further, a polymer alloy based on polyethylene terephthalate (PET) and polyethylene naphthalate (PEN); and a polymer alloy containing the above engineering plastics such as ABS/polycarbonate, nylon 6,6, aromatic polyamide resin (aromatic PA), polyphenylene ether/nylon 6,6, polyphenylene ether/polystyrene, polybutylene terephthalate/polycarbonate, and the like can be exemplified. These resins may be used alone or as a mixture of two or more kinds of resins. The thermoplastic resin preferably includes at least one kind of polyetheretherketone (PEEK), polyphenylene sulfide (PPS), polyethylene terephthalate (PET), and nylon 6,6 (66 Nylon, PA66).

In a case of providing the extruded coating layer of a thermoplastic resin, for example, by using the assembled conductor as a core wire and extruding and coating a composition including a thermoplastic resin on the assembled conductor using a screw of an extruder, the extruded coating layer can be formed to obtain an insulated wire. At this time, the extrusion coating of the thermoplastic resin is performed using an extrusion die at a temperature equal to or higher than the melting point of the thermoplastic resin (equal to or higher than the glass transition temperature in a case of an amorphous resin) such that the shape of the outer shape of the cross section of the extruded coating layer becomes the shape of the mold used for molding the assembled conductor. The extruded coating layer can also be formed using an organic solvent or the like and a thermoplastic resin.

The outer sheath insulating layer may contain various additives normally used for the insulated wire. In this case, the content of the additives is not particularly limited, but is preferably 5 parts by mass or less, and more preferably 3 parts by mass or less with respect to 100 parts by mass of the resin component.

The thickness of the outer sheath insulating layer is not particularly limited as long as it can coat the assembled conductor, but is preferably 20 to 250 µm from the viewpoint of miniaturization or weight reduction of the insulated wire.

In the insulated wire of the present invention, since the voids generated by assembling the strands are filled with the filler, the voids in the insulated wire are removed or the voids are reduced. In the insulated wire of the present invention, from the viewpoint of preventing the appearance defect of the outer sheath insulating layer due to the thermal expansion of the gas in the voids at the time of forming the outer sheath insulating layer, the ratio (porosity) of voids 14 occupying a cross-sectional area of the insulated wire is preferably 0.55% or less, more preferably 0.35% or less, still more preferably 0.20% or less, still more preferably 0.16% or less, still more preferably 0.15% or less, and still more preferably 0.14% or less. In the present invention or the specification, the void means a void portion (air portion and gap) generated between the strands or between the strands and the outer sheath insulating layer, and does not include voids such as bubbles included in the outer sheath insulating layer itself (bubbles included in a layer or between layers of the outer sheath insulating layer). The porosity can be calculated, for example, by the method described in Examples.

### [Method of Producing Insulated Wire]

The insulated wire of the present invention can be obtained by applying a filler including a thermoplastic resin on the outer periphery of the above-described strands (or strand insulating layer) to form a thermoplastic resin layer (filler layer), assembling these strands, molding the assembled conductor to have a desired cross-sectional shape, then heating the assembled conductor to impart the fluidity to the filler layer, thereby moving the filler into the voids along the strands or the strand insulating layers by the capillary phenomenon, thereby removing or reducing the voids, and coating the heated assembled conductor with the outer sheath insulating layer.

The filler can be applied by, for example, applying and baking the filler on the outer periphery of the conductive wire. A film thickness of the filler layer formed on the outer periphery of the strand can be appropriately determined according to the outer diameter and the number of strands or the dimension of the assembled conductor so that the voids inside the insulated wire can be removed or reduced. For example, the film thickness of the filler layer formed on the center strand (film thickness of an enamel layer formed with the filler) and the film thickness of the filler layer formed on the strand other than the center strand are preferably 3.0 to 15 µm. From the viewpoint of making the average thickness of the filler region on the outer periphery of the center strand thicker than the average thickness of the filler region other than the filler region on the outer periphery of the center strand, a value of a ratio ((A)/(B)) of a film thickness (A) of the filler layer formed on the center strand to a film thickness (B) of the filler layer formed on the strand other than the center strand is preferably 1.0 or more and 3.0 or less, more preferably 1.0 or more and 2.5 or less, and still more preferably 1.5 or more and 2.2 or less. In addition, as conditions of the applying and baking of the thermoplastic resin used as the filler, a method generally used in producing the insulated wire can be applied.

The heating condition of the assembled conductor is not particularly limited as long as it is a condition for imparting the fluidity to the filler. A heating temperature can be appropriately determined depending on the melting point (glass transition temperature in the case of the amorphous resin) of the thermoplastic resin included in the filler.

The filler may be a thermoplastic resin, and may include inorganic fine particles, an antioxidant, a compatibilizer, an adhesion aid, and the like in addition to the thermoplastic resin.

The content of the thermoplastic resin in the filler is preferably 70 mass% or more, more preferably 80 mass% or more, further preferably 90 mass% or more, further preferably 95 mass% or more, and further preferably 99 mass% or more.

### [Coil, Rotating Electrical Machine, and Electrical or Electronic Equipment]

The insulated wire of the present invention can be used as a coil in a field requiring electric characteristics (withstand voltage) and heat resistance, such as a rotating electrical machine and various electrical or electronic equipment. For example, the insulated wire of the present invention is used for a motor, a transformer, and the like, and can constitute a high-performance rotating electrical machine and electrical or electronic equipment. In particular, it is suitably used as a winding wire for a driving motor of a hybrid vehicle (HV) or an electric vehicle (EV). As descried above, according to the present invention, it is possible to provide an electrical or electronic equipment using the insulated wire of the present invention as a coil, such as driving motors of HV and EV.

The coil of the present invention is not particularly limited as long as it has an aspect suitable for any of various types of electrical or electronic equipment. Examples thereof include a coil formed by subjecting the insulated wire of the present invention to coil processing, and a coil formed such that, after the insulated wire of the present invention is bent, predetermined parts thereof are electrically coupled.

The coil formed by subjecting the insulated wire of the present invention to coil processing is not particularly limited, and examples thereof include a coil formed by winding a long insulated wire in a spiral. In such a coil, the number of turns of the insulated wire is not particularly limited. Normally, an iron core or the like is used to wind the insulated wire in a spiral.

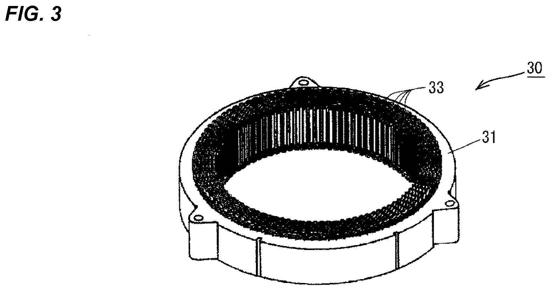

Examples of the coil formed such that, after the insulated wire of the present invention is bent, predetermined parts thereof are electrically coupled include a coil used for a stator of a rotating electrical machine or the like. Coils 33 (see FIGS. 2 and 3) are the example of such coil. The coils 33 are formed by cutting the insulated wire of the present invention in a predetermined length, bending the cut pieces in a U shape or the like to prepare a plurality of wire segments 34, and alternately coupling two open ends (terminals) 34a of the U shape or the like of each wire segment 34, as shown in FIG. 2.

The electrical or electronic equipment using the coil thus produced is not particularly limited. One preferred aspect of such electrical or electronic equipment is a transformer. In addition, examples of the preferred aspect thereof include a rotating electrical machine (particularly, driving motors of HV and EV) including a stator 30 shown in FIGS. 2 and 3. Such rotating electrical machine can be configured similar to a conventional rotating electrical machine except for being provided with the stator 30.

The stator 30 has a configuration similar to a configuration of a conventional stator except that the wire segments 34 are formed using the insulated wire of the present invention. Specifically, the stator 30 has a stator core 31, and the coils 33 in which, as shown in FIG. 2, the wire segments 34 formed using the insulated wire of the present invention are incorporated in slots 32 of the stator core 31 and the open ends 34a are electrically coupled. The coils 33 are fixed such that adjacent fusing layers, or the fusing layer and the slots 32 are bonded. Herein, the wire segments 34 may be incorporated in each slot 32 one by one. However, it is preferable that a pair of wire segments 34 are incorporated in each slot 32 as shown in FIG. 2. In the stator 30, the coils 33, which are formed by alternately coupling the open ends 34a that are two ends of the wire segments 34 which have been bent as described above, are housed in the slots 32 of the stator core 31. At this time, the open ends 34a of the wire segments 34 may be coupled and then housed in the slots 32, or after the insulating segments 34 are housed in the slots 32, the open ends 34a of the wire segments 34 may be bent and coupled.

### EXAMPLES

Hereinafter, the present invention will be described in more detail based on Examples, but the present invention is not limited to these.

### <Examples 1 to 11>

For Examples 3 to 5 and 7 to 11 in which the strand 11a has a strand insulating layer 11b, a thermosetting resin varnish as described in Table 1 was applied as a strand insulating layer to the surface of the strand 11a using a circular die, and the strand was passed through a baking furnace having a furnace length of 8 m set at 450°C at a speed of a passing time of 15 seconds. This was repeated a plurality of times to form the strand insulating layer 11b having the thickness described in Table 1. The type of resin of the thermosetting resin varnish was as follows.
·PU: Polyurethane
·PES: Polyethersulfone
·PAI: Polyamideimide
·PI: Polyimide

A thermoplastic resin (filler) to be the filler region 13 was applied onto the outer periphery of the strand 11a or the strand insulating layer 11b and baked to form an enamel layer (filler layer) made of the filler. Specifically, a thermoplastic resin (filler) varnish described in Table 1 was applied onto the outer periphery of the strand 11a or the strand insulating layer 11b using a circular die, and passed through a baking furnace having a furnace length of 8 m set at 450°C at a speed of a passing time of 15 seconds. This was repeated a plurality of times to obtain a strand having an enamel layer formed of a filler. The film thickness of the enamel layer (filler layer) formed of the filler was as described in the following Table 1. The type of resin of the thermoplastic resin varnish was as follows.
·PEI: Polyetherimide
·PPSU: Polyphenylsulfone

7 (Examples 1 to 9 and 11) or 37 (Example 10) strands on which the enamel layer formed of the filler was formed were prepared, and these strands were twisted around the strand prepared for the center strand. The twisted strands were molded using a mold to prepare a rectangular (Examples 1 to 10) or circular (Example 11) stranded wire 11.

The rectangular or circular stranded wire 11 was heated at 240°C to flow the filler layer, and the outer sheath insulating layer 12 made of the thermosetting resin (Examples 1 and 2) or the thermoplastic resin (Examples 3 to 11) described in Table 1 was formed on the outer periphery of the heated stranded wire. The method of forming the outer sheath insulating layer made of the thermosetting resin and the thermoplastic resin was as follows.

### (Thermosetting Resin)

The thermosetting resin varnish as described in Table 1 was applied to the surface of the stranded wire 11 using a rectangular die, and passed through a baking furnace having a furnace length of 8 m set at 450°C at a speed of a passing time of 15 seconds. This was repeated a plurality of times to form the outer sheath insulating layer 12 having the thickness described in Table 1. The type of resin of the thermosetting resin varnish is as follows.
·PAI: Polyamideimide
·PI: Polyimide

### (Thermoplastic Resin)

Using the stranded wire 11 as a core wire, an extruder equipped with a 30 mm full-flight screw (screw L/D = 25, screw compression ratio = 3) was used. Using the thermoplastic resin described below, extrusion coating was performed using an extrusion die so that the outer shape of the cross section of the outer sheath insulating layer was similar to the shape of the mold used at the time of molding the stranded wire 11, and the outer sheath insulating layer 12 made of a thermoplastic resin having a thickness of 100 µm was formed on the outer periphery of the stranded wire 11.
·PA66: Nylon 6,6
·PET: Polyethylene terephthalate
·PPS: Polyphenylene sulfide
·PEEK: Polyetheretherketone

### <Comparative Examples 1 to 3>

Insulated wires of Comparative Examples 1 to 3 were prepared in the same manner as in Examples 6, 7 and 11, respectively, except that the filler was not used.

For the obtained insulated wires (Examples 1 to 11 and Comparative Examples 1 to 3), a porosity was calculated by the following method, and an appearance and a dielectric breakdown voltage were evaluated.

### [Method of Calculating Porosity]

In the insulated wires of Examples and Comparative Examples, enlarged photographs (cross-sectional plan view images) of the cross section of the insulated wire were acquired using a microscope. From the obtained enlarged photographs, CAD was used as image processing software for measuring the area, and a ratio (porosity) of an area of the voids occupying the cross-sectional area of the insulated wire (area inside the outer boundary surface of the outer sheath insulating layer) was determined.

### [Evaluation of Appearance]

The appearance of each of the obtained insulated wires (Examples 1 to 11 and Comparative Examples 1 to 3) was visually observed and evaluated according to the following evaluation criteria.

### -Evaluation Criteria-

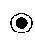 : There is no protrusion due to foaming on the surface of the outer sheath insulating layer.
o: There are few protrusions due to foaming on the surface of the outer sheath insulating layer.
×: There are many protrusions due to foaming on the surface of the outer sheath insulating layer.

### [Evaluation of Dielectric Breakdown Voltage]

An aluminum foil having a width of about 10 mm was wound around a center of a sample (linear test piece) obtained by cutting each insulated wire prepared above into a length of about 20 cm to provide an electrode, an alternating-current voltage having a sine wave of 50 Hz was applied between the stranded wire and the electrode at a boosting speed of 500 V/sec, and a voltage (effective value) when a current of 5 mA or more flowed was measured to obtain a dielectric breakdown voltage. The temperature of the measurement environment was room temperature (about 23°C). The above measurement was performed ten times, and an average value of the obtained dielectric breakdown voltages (kV) was evaluated by applying the following evaluation criteria.

### -Evaluation Criteria-

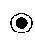 : 5 kV or more
o: 2 kV or more and less than 5 kV
×: less than 2 kV

### [Table 1]

**Table 1**

| | | Ex. 1 | Ex. 2 | Ex. 3 | Ex. 4 | Ex. 5 | Ex. 6 | Ex. 7 |
|---|---|---|---|---|---|---|---|---|
| Dimensions of stranded wire | Thickness (mm) | 1.50 | 1.50 | 1.50 | 1.50 | 1.50 | 1.50 | 1.50 |
| | Width (mm) | 2.00 | 2.00 | 2.00 | 2.00 | 2.00 | 2.00 | 2.00 |
| | Outer diameter (mm) | - | - | - | - | - | - | - |
| Porosity (%) | | 0.32 | 0.32 | 0.32 | 0.32 | 0.32 | 0.32 | 0.30 |
| Number of strands (number) | | 7 | 7 | 7 | 7 | 7 | 7 | 7 |
| Filler layer | Type of resin | PEI | PEI | PEI | PEI | PPSU | PEI | PEI |
| | Thickness (µm) | 10 | 10 | 10 | 10 | 10 | 10 | 10 |
| Strand insulating layer | Type of resin | - | - | PU | PES | PAI | - | PAI |
| | Thickness (µm) | - | - | 20 | 20 | 20 | - | 20 |
| Outer sheath insulating layer | Type of resin | PAI | PI | PA66 | PET | PPS | PEEK | PEEK |
| | Thickness (µm) | 100 | 100 | 100 | 100 | 100 | 100 | 100 |
| Appearance of outer sheath insulating layer | | ○ | ○ | ○ | ○ | ○ | ○ | ○ |
| Dielectric breakdown voltage | | ○ | ○ | ○ | ○ | 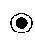 | 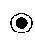 | 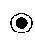 |

| | | | | | | | | |
|---|---|---|---|---|---|---|---|---|
| Remarks: 'Ex.' means Example according to this invention. | | | | | | | | |

**Table 1 (continued-1)**

| | | Ex. 8 | Ex. 9 | Ex. 10 | Ex. 11 | CEx. 1 | CEx. 2 | CEx. 3 |
|---|---|---|---|---|---|---|---|---|
| Dimensions of stranded wire | Thickness (mm) | 1.50 | 1.50 | 1.50 | - | 1.50 | 1.50 | - |
| | Width (mm) | 2.00 | 2.00 | 2.00 | - | 2.00 | 2.00 | - |
| | Outer diameter (mm) | - | - | - | Φ0.77 | - | - | Φ0.77 |
| Porosity (%) | | 0.13 | 0.10 | 0.19 | 0.55 | 0.98 | 1.01 | 3.20 |
| Number of strands (number) | | 7 | 7 | 37 | 7 | 7 | 7 | 7 |
| Filler layer | Type of resin | PEI | PEI | PEI | PEI | - | - | - |
| | Thickness (µm) | 10 | 10 | 10 | 10 | - | - | - |
| Strand insulating layer | Type of resin | PAI | PI | PAI | PAI | - | PAI | PAI |
| | Thickness (µm) | 20 | 20 | 20 | 20 | - | 20 | 20 |
| Outer sheath insulating layer | Type of resin | PEEK | PEEK | PEEK | PEEK | PEEK | PEEK | PEEK |
| | Thickness (µm) | 100 | 100 | 100 | 100 | 100 | 100 | 100 |
| Appearance of outer sheath insulating layer | | 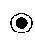 | 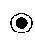 | ○ | ○ | × | × | × |
| Dielectric breakdown voltage | | 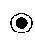 | 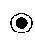 | 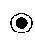 | 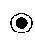 | × | × | × |

| | | | | | | | | |
|---|---|---|---|---|---|---|---|---|
| Remarks: 'Ex.' means Example according to this invention, and "CEx.' means Comparative Example. | | | | | | | | |

As shown in Table 1, in the insulated wires (Comparative Examples 1 to 3) including no filler, a large number of protrusions due to foaming were observed on the surface of the outer sheath insulating layer of the obtained insulated wire. In addition, the dielectric breakdown voltages were all less than 2 kV.

On the other hand, in the insulated wires (Examples 1 to 11) of the present invention having the filler inside the outer sheath insulating layer (having the filler region in which the inside of the insulated wire is filled with the filler), the appearance of the protrusion due to foaming on the surface of the outer sheath insulating layer of the obtained insulated wire was suppressed. The insulated wires of Examples 1 to 11 showed a high dielectric breakdown voltage.

Having described the present invention as related to the embodiment, it is our intention that the present invention not be limited by any of the details of the description, unless otherwise specified, but rather be construed broadly within its spirit and scope as set out in the accompanying claims.

The present application claims priority of Patent Application No. 2022-018228 filed in Japan on February 8, 2022, which is herein incorporated by reference as part of the present specification.

### DESCRIPTION OF SYMBOLS

- 1: Insulated wire
- 11: Stranded wire (assembled conductor)
- 11a: Strand
- 11b: Strand insulating layer
- 12: Outer sheath insulating layer
- 13: Filler region
- 14: Void
- 15: Filler region on outer periphery of center strand
- 16: Filler region between strands in contact with outer sheath insulating layer
- 30: Stator
- 31: Stator core
- 32: Slot
- 33: Coil
- 34: Wire segment
- 34a: Open end

## Claims

1. An insulated wire, comprising:
an assembled conductor obtained by assembling or twisting a plurality of strands;
an insulating layer coating an outer periphery of the assembled conductor; and
a filler region that fills a space between the strands and a space between the strands and the insulating layer and includes a thermoplastic resin.

2. The insulated wire according to claim 1, wherein a ratio of voids occupying a cross-sectional area of the assembled conductor is 0.55% or less.

3. The insulated wire according to claim 1 or 2, wherein the filler region includes at least one kind of polyetherimide and polyphenylsulfone.

4. The insulated wire according to any one of claims 1 to 3, wherein the insulating layer includes at least one kind of polyetheretherketone, polyphenylene sulfide, polyethylene terephthalate, 66 nylon, polyamideimide, and polyimide.

5. The insulated wire according to any one of claims 1 to 4,
wherein the assembled conductor has a center strand, and an average thickness of a filler region on an outer periphery of the center strand is thicker than an average thickness of a filler region other than the filler region on the outer periphery of the center strand.

6. The insulated wire according to any one of claims 1 to 5,
wherein when a cross-sectional shape of the assembled conductor is rectangular, a width of the rectangle is 1.0 to 5.0 mm and a thickness of the rectangle is 0.4 to 3.0 mm, and when the cross-sectional shape of the assembled conductor is circular, an outer diameter of the circle is 0.25 to 2.0 mm, and
wherein a thickness of the insulating layer coating the outer periphery of the assembled conductor is 20 to 250 µm.

7. The insulated wire according to any one of claims 1 to 6, wherein the strand has an insulating layer including a thermosetting resin on an outer periphery of a conductive wire, a film thickness of the insulating layer is 0.5 to 30 µm, and the thermosetting resin includes at least one kind of polyamideimide, polyimide, polyester, and polyurethane.

8. The insulated wire according to any one of claims 1 to 7, wherein the filler region is formed by a filler layer coated on the outer periphery of the strand flowing by heating, and a film thickness of the filler layer is 3.0 to 15 µm.

9. The insulated wire according to any one of claims 1 to 8, wherein the assembled conductor is formed by twisting 7 to 37 strands.

10. A coil, using the insulated wire according to any one of claims 1 to 9.

11. A rotating electrical machine and an electrical or electronic equipment, comprising the coil according to claim 10.
